# EUROPÄISCHE PATENTSCHRIFT

(11) **EP 1 265 967 B1**
(45) Veröffentlichungstag und Bekanntmachung des Hinweises auf die Patenterteilung: **28.06.2006**
(21) Anmeldenummer: 01915178.6
(22) Anmeldetag: 30.01.2001
(51) Int. Cl.: C09D 5/02

(54) **PHYSIKALISCH, THERMISCH ODER THERMISCH UND MIT AKTINISCHER STRAHLUNG HÄRTBARER WÄSSRIGER BESCHICHTUNGSSTOFF UND SEINE VERWENDUNG**
AQUEOUS COATING MATERIAL THAT CAN BE HARDENED PHYSICALLY, THERMALLY OR THERMALLY AND WITH ACTINIC RADIATION AND THE UTILIZATION THEREOF
SUBSTANCE DE REVETEMENT AQUEUSE, POUVANT DURCIR PAR VOIE PHYSIQUE, THERMIQUE OU THERMIQUE ET AVEC RAYONNEMENT ACTINIQUE, ET SON UTILISATION

(30) Priorität: 02.02.2000 DE 10004494
(43) Veröffentlichungstag der Anmeldung: 18.12.2002
(73) Patentinhaber: BASF Coatings AG, 48165 Münster (DE)
(72) Erfinder: WEGNER, Egon, 97209 Veitshöchheim (DE); SCHWARTE, Stephan, 48282 Emsdetten (DE); JANSING, Frank, 97941 Tauberbischofsheim (DE)
(74) Vertreter: Fitzner, Uwe
(86) Internationale Anmeldenummer: PCT/EP2001/000973
(87) Internationale Veröffentlichungsnummer: WO 2001/057142

(56) Entgegenhaltungen:
- EP-A- 0 113 435
- EP-A- 0 702 055
- DE-A- 19 904 330
- FR-A- 2 746 809

## Beschreibung

Die vorliegende Erfindung betrifft einen neuen wäßrigen Beschichtungsstoff auf Polyurethanbasis und seine Verwendung zur Herstellung von ein- und mehrschichtigen farb- und/oder effektgebenden Lackierungen in der Automobilerst- und -reparaturlackierung, der industrielle Lackierung, inclusive Coil Coating und Container Coating, der Kunststofflackierung und der Möbellackierung.

Thermisch härtbare wäßrige Beschichtungsstoffe, welche ein Vemetzungsmittel, ein farb- und/oder effektgebendes Pigment und ein gesättigtes, ungesättigtes und/oder mit olefmisch ungesättigten Verbindungen gepfropftes, ionisch und/oder nichtionisch stabilisiertes Polyurethan auf Basis aliphatischer, cycloaliphatischer, aliphatisch-cycloaliphatischer, aromatischer, aliphatisch-aromatischer und/oder cycloaliphatisch-aromatischer Polyisocanate enthalten, sowie die entsprechenden Lackierungen sind beispielsweise aus der Patentschrift EP-A-0 089 497, DE-A-44 37 535, DE-C-197 22 862 oder DE-A-196 45 761 bekannt. Diese bekannten wäßrigen Beschichtungsstoffe, insbesondere die Wasserbasislacke, und die hiermit hergestellten ein- oder mehrschichtigen farb- und/oder effektgebenden Lackierungen weisen sehr gute anwendungstechnische Eigenschaften auf.

Enthalten die aus den bekannten Wasserbasislacken hergestellten ein- oder mehrschichtigen farb- und effektgebende Lackierungen Effektpigmente, insbesondere Metallic-Pigmente, kann es zur Bildung von sogenannten Wolken, d. h. von Hell-Dunkel-Schattierungen, kommen. Diese sind ein Hinweis auf Mängel der Dispergierung und/oder Orientierung der farb- und/oder effektgebenden Pigmente, insbesondere der Effektpigmente, in der Lackierung. Wolkige Lackierungen werden aber gerade bei besonders hochwertigen Produkten, die großflächige Lackierungen aufweisen, wie beispielsweise Automobile, grundsätzlich nicht akzeptiert, weil solche Lackstörungen den Eindruck minderer Qualität des Gesamtprodukts (z. B. Automobil) erwecken.

Aufgabe der vorliegenden Erfindung ist es, einen neuen thermisch härtbaren oder thermisch und mit aktinischer Strahlung härtbaren wäßrigen Beschichtungsstoff bereitzustellen, der sehr gut als Wasserbasislack oder als Unidecklack zur Herstellung ein- und mehrschichtiger farb- und/oder effektgebender Lackierungen, die eine deutlich verringerte Neigung zur Bildung von Wolken zeigen, geeignet ist. Darüber hinaus sollen die ansonsten vorzüglichen anwendungstechnischen Eigenschaften der bisher bekannten Wasserbasislacke und Unidecklacke nicht in Mitleidenschaft gezogen werden, sondern im vollen Umfang erhalten bleiben. Nicht zuletzt soll die Verringerung der Bildung von Wolken auch bei der Überlackierung der neuen Wasserbasislackschichten mit den unterschiedlichsten Klarlackierungen eintreten.

Demgemäß wurde der neue physikalisch, thermisch und/oder mit aktinischer Strahlung härtbare wäßrige Beschichtungsstoff gefunden, der
A) mindestens ein gesättigtes, ungesättigtes und/oder mit olefinisch ungesättigten Verbindungen gepfropftes, ionisch und/oder nichtionisch stabilisiertes Polyurethan als Bindemittel,
B) mindestens ein farb- und/oder effektgebendes Pigment und
C) mindestens ein farbloses, gegenüber den übrigen Bestandteilen des Beschichtungsstoffs im wesentlichen inertes, transparentes oder opakes Pulver einer mittleren Teilchengröße von 1,0 bis 10,0 µm, dessen Partikel eine Dichte von 0,8 bis 3,6 gcm⁻³ aufweisen;
enthält und der im folgenden als "erfmdungsgemäßer Beschichtungsstoff" bezeichnet wird.

Weitere erfindungsgemäße Gegenstände gehen aus der nachfolgenden Beschreibung hervor.

Im Hinblick auf den Stand der Technik war es überraschend und für den Fachmann nicht vorhersehbar, daß die der vorliegenden Erfindung zugrundeliegende Aufgabe mit Hilfe des speziell ausgewählten erfindungsgemäß zu verwendenden Pulvers (C) gelöst werden konnte. Denn eher stand es zu erwarten, daß die Verwendung von Pulvern (C), deren mittleren Teilchengröße in der Größenordnung der Trockenschichtdicke der aus den erfindungsgemäßen Beschichtungsstoffen hergestellten Basislacke oder Unidecklacke liegt, schwerwiegende Nachteile, insbesondere hinsichtlich der Qualität des optischen Gesamteindrucks sowie der Stärke der Zwischenschichthaftung, mit sich bringen würde.

Der erfindungsgemäße Beschichtungsstoff ist physikalisch härtend.

Im Rahmen der vorliegenden Erfindung bedeutet der Begriff "physikalische Härtung" die Härtung einer Schicht aus einem Beschichtungsstoff durch Verfilmung durch Lösemittelabgabe aus dem Beschichtungsstoff, wobei die Verknüpfung innerhalb der Beschichtung über Schlaufenbildung der Polymermoleküle der Bindemittel (zu dem Begriff vgl. Römpp Lexikon Lacke und Druckfarben, Georg Thieme Verlag, Stuttgart, New York, 1998, »Bindemittel«, Seiten 73 und 74) erfolgt. Oder aber die Verfilmung erfolgt über die Koaleszenz von Bindemittelteilchen (vgl. Römpp Lexikon Lacke und Druckfarben, Georg Thieme Verlag, Stuttgart, New York, 1998, »Härtung«, Seiten 274 und 275). Üblicherweise sind hierfür keine Vernetzungsmittel notwendig. Gegebenenfalls kann die physikalische Härtung durch Luftsauerstoff, Hitze oder durch Bestrahlen mit aktinischer Strahlung unterstützt werden.

Der erfindungsgemäße Beschichtungsstoff ist thermisch härtbar. Hierbei kann er selbstvemetzend oder fremdvernetzend sein.

Im Rahmen der vorliegenden Erfindung bezeichnet der Begriff "selbstvernetzend" die Eigenschaft eines Bindemittels mit sich selbst Vernetzungsreaktionen einzugehen. Voraussetzung hierfür ist, daß in den Bindemitteln bereits beide Arten von komplementären reaktiven funktionellen Gruppen enthaltend sind, die für eine Vernetzung notwendig sind. Als fremdvemetzend werden dagegen solche Beschichtungsstoffe, Klebstoffe und Dichtungsmassen bezeichnet, worin die eine Art der komplementären reaktiven funktionellen Gruppen in dem Bindemittel, und die andere Art in einem Härter oder Vernetzungsmittel vorliegen. Ergänzend wird hierzu auf Römpp Lexikon Lacke und Druckfarben, Georg Thieme Verlag, Stuttgart, New York, 1998, »Härtung«, Seiten 274 bis 276, insbesondere Seite 275, unten, verwiesen.

Der erfindungsgemäße Beschichtungsstoff ist thermisch und mit aktinischer Strahlung härtbar. Werden die thermische und die Härtung mit aktinischem Licht bei einem Beschichtungsstoff gemeinsam angewandt, spricht man auch von "Dual Cure" und" Dual-Cure-Beschichtungsstoff".

Im Rahmen der vorliegenden Erfindung ist unter aktinischer Strahlung elektromagnetische Strahlung, wie sichtbares Licht, UV-Strahlung oder Röntgenstrahlung, insbesondere UV-Strahlung, und Korpuskularstrahlung wie Elektronenstrahlung zu verstehen.

Der erfmdungsgemäße Beschichtungsstoff ist ein Einkomponenten(1K)-System.

Im Rahmen der vorliegenden Erfindung ist unter einem Einkomponenten(1K)-System ein thermisch oder thermisch und mit aktinischer Strahlung härtender Beschichtungsstoff zu verstehen, bei dem das Bindemittel und das Vernetzungsmittel nebeneinander, d.h. in einer Komponente, vorliegen.

Voraussetzung hierfür ist, daß die beiden Bestandteile erst bei höheren Temperaturen und/oder bei Bestrahlen mit aktinischer Strahlung miteinander vemetzen.

Der erfindungsgemäße Beschichtungsstoff kann des weiteren ein Zweikomponenten(2K)- oder Mehrkomponenten(3K, 4K)-System sein.

Im Rahmen der vorliegenden Erfmdung ist hierunter ein Beschichtungsstoff zu verstehen, bei dem insbesondere das Bindemittel und das Vernetzungsmittel getrennt voneinander in mindestens zwei Komponenten vorliegen, die erst kurz vor der Applikation zusammengegeben werden. Diese Form wird dann gewählt, wenn Bindemittel und Vernetzungsmittel bereits bei Raumtemperatur miteinander reagieren. Beschichtungsstoffe dieser Art werden vor allem zur Beschichtung thermisch empfindlicher Substrate, insbesondere in der Autoreparaturlackierung, angewandt.

Der erfindungsgemäße Beschichtungsstoff ist wäßrig. Dies bedeutet, daß seine Bestandteile in Wasser oder in einer Mischung, die aus Wasser und untergeordneten Mengen mindestens eines wassermischbaren organischen Lösemittels besteht, gelöst und/oder dispergiert vorliegen. Hierbei sind unter "untergeordneten Mengen" solche Mengen zu verstehen, die die wäßrige Natur der Mischung nicht zerstören.

Der erfndungswesentliche Bestandteil des erfindungsgemäßen Beschichtungsstoffs ist das Pulver (C). Hierbei handelt es sich um ein einheitlich zusammengesetztes Pulver (C), d. h., daß seine Partikel stofflich dieselbe Zusammensetzung haben. Oder aber es handelt sich um ein Gemisch aus mindestens zwei Pulvern (C). Welcher Variante der Vorzug geben wird, richtet sich nach den Erfordernissen, die im Einzelfall an den erfindungsgemäßen Beschichtungsstoff gestellt werden. In den allermeisten Fällen reicht die Anwendung eines Pulvers (C) aus, um die erfindungsgemäßen Vorteile zu erzielen.

Das erfindungsgemäß zu verwendende Pulver (C) ist farblos. Dies bedeutet, daß es keinen Buntton und keine Buntheit, sondern nur Helligkeit aufweist. Somit ist es weiß oder weist einen Grauton auf. Vorzugsweise ist es aber weiß. Ergänzend wird auf Römpp Lexikon Lacke und Druckfarben, Georg Thieme Verlag, Stuttgart, New York, 1998 »Unbuntpunkt«, Seite 590, verwiesen.

Das Pulver (C) ist transparent im Sinne von lasierend oder opak im Sinne von deckend. Vorzugsweise werden transparente Pulver (C) angewandt.

Das Pulver (C) ist im wesentlichen inert. D. h., daß es innerhalb des für die Herstellung, die Lagerung und die Verarbeitung des erfindungsgemäßen Beschichtungsstoffs üblicherweise vorgesehenen Zeitraums in Wasser und in den in dem erfindungsgemäßen Beschichtungsstoff gegebenenfalls noch vorliegenden organischen Lösemitteln nur schwer löslich oder unlöslich ist, keine wesentlichen Bestandteile des Beschichtungsstoffs absorbiert oder ausflockt, keine chemischen Reaktionen oder nur sehr langsam ablaufende chemische Reaktionen mit wesentlichen Bestandteilen des Beschichtungsstoffs eingeht, keine chemischen Reaktionen zwischen den wesentlichen Bestandteilen des Beschichtungsstoffs katalysiert und durch Hitze und/oder aktinisches Licht in seinen Eigenschaften nicht oder nur sehr langsam verändert wird.

Das Pulver (C) weist eine mittlere Teilchengröße von 1,0 bis 10,0, vorzugsweise 3,0 bis 7,5 und insbesondere 4,0 bis 7,0 µm auf.

Vorteilhafte Pulver (C) haben eine vergleichsweise enge Korngrößenverteilung. D. h., daß sowohl der Anteil an Feinstkom als auch an Grobkom vergleichsweise gering ist. Besonders vorteilhafte Pulver (C) haben hierbei eine maximale Teilchengröße unterhalb 12, vorzugsweise unterhalb 11 und insbesondere unterhalb 10 µm.

Die Partikel des erfindungsgemäß zu verwendenden Pulvers (C) haben eine Dichte von 0,8 bis 3,6, vorzugsweise 0,9 bis 3,4, bevorzugt 1,0 bis 3,2 und insbesondere 1,1 bis 3,0 gcm⁻³.

Zwar könnten in Einzelfällen auch Partikel mit einer niedrigeren Dichte verwendet werden, indes besteht dann die Gefahr, daß diese Partikel in den Beschichtungsstoffen bei längerer Lagerung aufschwimmen. Andererseits könnten in Einzelfällen auch Partikel mit einer höheren Dichte verwendet werden, indes besteht dann die Gefahr, daß sich die Partikel bei länger Lagerung vergleichsweise schnell absetzen.

Die Partikel der erfindungsgemäß zu verwendenden Pulver (C) können von beliebiger Form sein. Erfmdungsgemäß ist es von Vorteil, wenn sie sphärische Form haben. Im Rahmen der vorliegenden Erfmdung ist unter sphärischer Form eine im wesentlichen kugelige Form zu verstehen. Beispiele kugeliger Formen sind Kugeln, eiförmige Partikel, Dodekaeder oder Ikosaeder, die auch gewisse Unregelmäßigkeiten aufweisen können.

Beispiele geeigneter Stoffe, aus denen die Partikel bzw. die Pulver (C) bestehen können, sind vemetzte oder unvernetzte, organische oder metallorganische Polymere, anorganische Mineralien, Salze oder Keramikmaterialien oder organisch modifizierte Keramikmaterialien oder Gemische dieser Stoffe. Von diesen sind die anorganischen Mineralien von Vorteil und werden deshalb bevorzugt verwendet. Hierbei kann es sich um natürliche und synthetische Mineralien handeln.

Beispiele für die gut geeigneten Mineralien sind Siliziumdioxid, Aluminiumsilikate, Calciumsilikate, Magnesiumsilikate, Calciumaluminiumsilikate, Magnesiumaluminiumsilikate, Calciummagnesiumsilikate, Calciummagnesiumaluminiumsilikate, Berylliumaluminiumsilikate, Aluminiumphosphat oder Calciumphosphat oder Gemische hiervon. Von diesen ist Siliziumdioxid besonders vorteilhaft und wird deshalb erfindungsgemäß besonders bevorzugt verwendet.

Die Herstellung der erfmdungsgemäß zu verwendenden Pulver (C) weist keine methodischen Besonderheiten auf sondern erfogt mit Hilfe von Methoden, wie sie auf dem Gebiet der organischen, metallorganischen oder anorganischen Chemie üblich und bekannt sind. So können organische Polymere beispielsweise durch Emulsions-, Dispersions- oder Fällungspolymerisation oder durch Zerkleinern, beispielsweise durch Vermahlen oder Versprühen von Schmelzen oder Lösungen bereits hergestellter Polymere hergestellt werden. Die anorganischen Partikel können beispielsweise durch Fällungsprozesse und/oder Zerkleinern erzeugt werden. Bei keramischen Materialien wird üblicherweise zunächst ein Grünling, der bereits die gewünschte Pulverform haben kann, hergestellt und anschließend gebrannt.

Gegebenenfalls werden die Oberflächen der Partikel einer Nachbehandlung, beispielsweise einer Hydrophilierung oder einer Hydrophobierung, unterzogen. Die Nachbehandlung darf aber nicht die Inertheit der Partikel aufheben.

Die Pulver (C) können als solche in die erfindungsgemäßen Beschichtungsstoffe eingearbeitet werden, sofern sie sich hierbei leicht verteilen und nicht agglomerieren. Erfindungsgemäß ist es von Vorteil, wenn die Pulver (C) als Pulverpasten eingearbeitet werden. Weitere Vorteile resultieren, wenn als Pastenharze oder Reibharze Bindemittel verwendet werden, die im erfindungsgemäßen Beschichtungsstoff enthalten sind.

Der Gehalt der erfindungsgemäßen Beschichtungsstoffe an den Pulvern (C) kann sehr breit variieren und richtet sich vor allem nach der Intensität der Hell-Dunkel-Schattierungen, die es zu vermeiden gilt, und nach dem vorgegebenen Farbton der farb- und effektgebenden Beschichtung, die aus dem betreffenden erfindungsgemäßen Beschichtungsstoff hergestellt wird. Vorzugsweise werden 0,09 bis 5,0, bevorzugt 0,12 bis 3,5 und insbesondere 0,3 bis 2,5 Gew.%, jeweils bezogen auf den Festkörpergehalt des erfindungsgemäßen Beschichtungsstoffs, angewandt.

Der weitere wesentliche Bestandteil des erfindungsgemäßen Beschichtungsstoffs ist mindestens ein Bindemittel (A).

Erfindungsgemäß handelt es sich hierbei um mindestens ein gesättigtes, ungesättigtes und/oder mit olefinisch ungesättigten Verbindungen gepfropftes, ionisch und/oder nichtionisch stabilisiertes Polyurethan (A).

Vorteilhafterweise weist das erfindungsgemäß zu verwendende Polyurethan (A) je nach Art der Stabilisierung eine Säurezahl oder Aminzahl von 10 bis 250 mg KOH/g (ionische Stabilisierung oder nichtionische plus ionische Stabilisierung) oder von 0 bis 10 mg KOH/g (nichtionische Stabilisierung), eine OH-Zahl von 30 bis 350 mg KOH/g und ein zahlenmittleres Molekulargewicht von 1.500 bis 100.000 Dalton auf.

Das Polyurethan (A) kann in beliebiger Weise hergestellt werden. Vorzugsweise ist es erhältlich, indem man in einem ersten Verfahrensschritt ein Polyurethanpräpolymer, das mindestens eine freie Isocyanatgruppe enthält, herstellt.

Das Polyurethanpräpolymer ist linear, verzweigt oder kammartig, insbesondere aber linear, aufgebaut. Hierbei enthält das lineare Polyurethanpräpolymer vorzugsweise zwei freie Isocyanatgruppen, insbesondere zwei endständige freie Isocyanatgruppen. Die verzweigten oder kammartig aufgebauten Polyurethanpräpolymere enthalten vorzugsweise mindestens zwei, insbesondere mehr als zwei, freie Isocyanatgruppen, wobei endständige freie Isocyanatgruppen bevorzugt sind.

Methodisch gesehen weist die Herstellung der erfindungsgemäß zu verwendenden Polyurethanpräpolymere keine Besonderheiten auf, sondern erfolgt beispielsweise wie in den Patentschriften DE-C-197 22 862, DE-A-196 45 761, DE-A-44 37 535, EP-A-0 522 419 oder EP-A-0 522 420 beschrieben, durch Umsetzung mindestens eines Polyisocyanats, insbesondere eines Diisocyanats, mit mindestens einem Polyol, insbesondere einem Diol, wobei die Isocyanatkomponente im molaren Überschuß angewandt wird, so daß endständige freie Isocyanatgruppen resultieren.

Vorzugsweise werden für die Herstellung der Polyurethanpräpolymere Diisocyanate sowie gegebenenfalls in untergeordneten Mengen Polyisocyanate zur Einführung von Verzweigungen verwendet. Im Rahmen der vorliegenden Erfindung sind unter untergeordneten Mengen Mengen zu verstehen, die kein Gelieren der Polyurethanpräpolymere bei ihrer Herstellung bewirken. Letzteres kann auch noch durch die Mitverwendung geringer Mengen an Monoisocyanaten verhindert werden.

Beispiele für geeignete Diisocyanate sind Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethyl-cyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, 1,3-Diisocyanatocyclohexan, 1,4- Diisocyanatocyclohexan, Dicyclohexylmethan-2,4'-diisocyanat, Trimethylendiisocyanat, Tetramethylendiisocyanat, Pentamethylendiisocyanat, Hexamethylendiisocyanat, Ethylethylendiisocyanat, Trimethylhexandiisocyanat, Heptanmethylendiisocyanat oder Diisocyanate, abgeleitet von Dimerfettsäuren, wie sie unter der Handelsbezeichnung DDI 1410 von der Firma Henkel vertrieben und in den Patentschriften DO 97/49745 und WO 97/49747 beschrieben werden, insbesondere 2-Heptyl-3,4-bis(9-isocyanatononyl)-1-pentyl-cyclohexan, oder 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan, 1,2-, 1,4- oder 1,3-Bis(4-isocyanatobut-1-yl)cyclohexan, flüssiges Bis(4-isocyanatocyclohexyl)methan eines trans/trans-Gehalts von bis zu 30 Gew.-%, vorzugsweise 25 Gew.-% und insbesondere 20 Gew.-%, wie es den Patentschriften DE-A-44 14 032, GB-A-1220717, DE-A-16 18 795 oder DE-A-17 93 785 beschrieben wird; Tetramethylxylylidendiisocyanat (TMXDI® der Firma CYTEC), Toluylendiisocyanat, Xylylendiisocyanat, Bisphenylendiisocyanat, Naphthylendiisocyanat oder Diphenylmethandiisocyanat.

Beispiele geeigneter Polyisocyanate auf Basis der vorstehend beschriebenen Diisocyanate sind isocyanatgruppenhaltige Polyurethanpräpolymere, die durch Reaktion von Polyolen mit einem Überschuß an mindestens einem der vorstehend beschriebenen Diisocyanate hergestellt worden sind, und/oder Isocyanurat-, Biuret-, Allophanat-, Iminooxadiazindion-, Urethan-, Harnstoff- und/oder Uretdiongruppen enthaltende Polyisocyanate. Bevorzugt werden Polyisocyanate verwendet, die im statistischen Mittel 2,5 bis 5 Isocyanatgruppen pro Molekül und Viskositäten von 100 bis 10.000, vorzugsweise 100 bis 5000 mPas aufweisen. Außerdem können die Polyisocyanate in üblicher und bekannter Weise hydrophil oder hydrophob modifiziert sein.

Ganz besonders bevorzugt werden Gemische aus Uretdion- und/oder Isocyanuratgruppen und/oder Allophanatgruppen aufweisenden Polyisocyanaten auf Basis der vorstehend beschriebenen Diisocyanate, wie sie durch katalytische Oligomerisierung von Diisocyanaten unter Verwendung von geeigneten Katalysatoren entstehen, eingesetzt.

Beispiele geeigneter Monoisocyanate sind Phenylisocyanat, Cyclohexylisocyanat oder Stearylisocyanat oder Vinylisocyanat, Methacryloylisocyanat und/oder 1-(1-Isocyanato-1-methylethyl)-3-(1-methylethenyl)-benzol (TMI® der Firma CYTEC),

Beispiele geeigneter Polyole sind gesättigte oder olefinisch ungesättigte Polyesterpolyole, welche durch Umsetzung von
- gegebenenfalls sulfonierten gesättigen und/oder ungesättigten Polycarbonsäuren oder deren veresterungsfahigen Derivaten, gegebenenfalls zusammen mit Monocarbonsäuren, sowie
- gesättigten und/oder ungesättigten Polyolen, gegebenenfalls zusammen mit Monoolen,
hergestellt werden.

Beispiele für geeigente Polycarbonsäuren sind aromatische, aliphatische und cycloaliphatische Polycarbonsäuren. Bevorzugt werden aromatische und/oder aliphatische Polycarbonsäuren eingesetzt.

Beispiele für geeignete aromatische Polycarbonsäuren sind Phthalsäure, Isophthalsäure, Terephthalsäure, Phthalsäure-, Isophthalsäure- oder Terephthalsäuremonosulfonat, oder Halogenphthalsäuren, wie Tetrachlor- bzw. Tetrabromphthalsäure, von denen Isophthalsäure vorteilhaft ist und deshalb bevorzugt verwendet wird.

Beispiele für geeignete acyclische aliphatische oder ungesättigte Polycarbonsäuren sind Oxalsäure, Malonsäure, Bernsteinsäure, Glutarsäure, Adipinsäure, Pimelinsäure, Korksäure, Azelainsäure, Sebacinsäure, Undecandicarbonsäure, Dodecandicarbonsäure oder Dimerfettsäuren oder Maleinsäure, Fumarsäure oder Itaconsäure von denen Adipinsäure, Glutarsäure, Azelainsäure, Sebacinsäure, Dimerfettsäuren und Maleinsäure vorteilhaft sind und deshalb bevorzugt verwendet werden.

Beispiele für geeignete cycloaliphatische und cyclische ungesättigte Polycarbonsäuren sind 1,2-Cyclobutandicarbonsäure, 1,3-Cyclobutandicarbonsäure, 1,2-Cyclopentandicarbonsäure, 1,3-Cyclopentandicarbonsäure, Hexahydrophthalsäure, 1,3-Cyclohexandicarbonsäure, 1,4-Cyclohexandicarbonsäure, 4-Methylhexahydrophthalsäure, Tricyclodecandicarbonsäure, Tetrahydrophthalsäure oder 4-Methyltetrahydrophthalsäure. Diese Dicarbonsäuren können sowohl in ihrer cis- als auch in ihrer trans-Form sowie als Gemisch beider Formen eingesetzt werden.

Geeignet sind auch die veresterungsfähigen Derivate der obengenannten Polycarbonsäuren, wie z.B. deren ein- oder mehrwertigen Ester mit aliphatischen Alkoholen mit 1 bis 4-C-Atomen oder Hydroxyalkoholen mit 1 bis 4 C-Atomen. Außerdem können auch die Anhydride der obengenannten Polycarbonsäuren eingesetzt werden, sofern sie existieren.

Gegebenenfalls können zusammen mit den Polycarbonsäuren auch Monocarbonsäuren eingesetzt werden, wie beispielsweise Benzoesäure, tert.-Butylbenzoesäure, Laurinsäure, Isononansäure, Fettsäuren natürlich vorkommender Öle, Acrylsäure, Methacrylsäure, Ethacrylsäure oder Crotonsäure. Bevorzugt wird als Monocarbonsäure Isononansäure eingesetzt.

Beispiele geeigneter Polyole sind Diole und Triole, insbesondere Diole. Üblicherweise werden Triole neben den Diolen in untergeordneten Mengen verwendet, um Verzweigungen in die Polyesterpolyole einzuführen.

Geeignete Diole sind Ethylenglykol, 1,2- oder 1,3-Propandiol, 1,2-, 1,3- oder 1,4-Butandiol, 1,2-, 1,3-, 1,4- oder 1,5-Pentandiol, 1,2-, 1,3-, 1,4-, 1,5- oder 1,6-Hexandiol, Hydroxypivalinsäureneopentylester, Neopentylglykol, Diethylenglykol, 1,2-, 1,3- oder 1,4-Cyclohexandiol, 1,2-, 1,3- oder 1,4-Cyclohexandimethanol, Trimethylpentandiol, Ethylbutylpropandiol, die stellungsisomeren Diethyloctandiole, 2-Butyl-2-ethylpropandiol-1,3, 2-Butyl-2-methylpropandiol-1,3, 2-Phenyl-2-methylpropan-diol-1,3, 2-Propyl-2-ethylpropandiol-1,3, 2-Di-tert.-butylpropandiol-1,3, 2-Butyl-2-propylpropandiol-1,3, 1-Dihydroxymethyl-bicyclo[2.2.1]heptan, 2,2-Diethylpro-pandiol-1,3, 2,2-Dipropylpropandiol-1,3, 2-Cyclohexyl-2-methylpropandiol-1,3 2,5-Dimethyl-hexandiol-2,5, 2,5-Diethylhexandiol-2,5, 2-Ethyl-5-methylhexandiol-2,5, 2,4-Dimethylpentandiol-2,4, 2,3-Dimethylbutandiol-2,3, 1,4-Bis(2'-hydroxypropyl)-benzol oder 1,3-Bis(2'-hydroxypropyl)-benzol.

Diese Diole können auch als solche für die Herstellung der erfindungsgemäß zu verwendenden Polyurethane (A) eingesetzt werden.

Von diesen Diolen sind Hexandiol und Neopentylglykol besonders vorteilhaft und werden deshalb besonders bevorzugt verwendet.

Beispiele geeigneter Triole sind Trimethylolethan, Trimethylolpropan oder Glycerin, insbesondere Trimethylolpropan.

Die vorstehend genannten Triole können auch als solche für die Herstellung der erfindungsgemäß zu verwendenden Polyurethane (A) eingesetzt werden (vgl. die Patentschrift EP-A-0 339 433).

Gegebenenfalls können untergeordnete Mengen von Monoolen mit verwendet werden. Beispiele geeigneter Monoole sind Alkohole oder Phenole wie Ethanol, Propanol, n-Butanol, sec.- Butanol, tert.-Butanol, Amylalkohole, Hexanole, Fettalkohole, Allylalkohol oder Phenol.

Die Herstellung der Polyesterpolyole kann in Gegenwart geringer Mengen eines geeigneten Lösemittels als Schleppmittel durchgeführt werden. Als Schleppmittel werden z. B. aromatische Kohlenwasserstoffe, wie insbesondere Xylol und (cyclo)aliphatische Kohlenwasserstoffe, z. B. Cyclohexan oder Methylcyclohexan, eingesetzt.

Weitere Beispiele geeigneter Polyole sind Polyesterdiole, die durch Umsetzung eines Lactons mit einem Diol erhalten werden. Sie zeichnen sich durch die Gegenwart von entständigen Hydroxylgruppen und wiederkehrenden Polyesteranteilen der Formel -(-CO-(CHR)ₘ-CH₂-O-)- aus. Hierbei ist der Index m bevorzugt 4 bis 6 und der Substitutent R = Wasserstoff, ein Alkyl-, Cycloalkyl- oder Alkoxy-Rest. Kein Substituent enthält mehr als 12 Kohlenstoffatome. Die gesamte Anzahl der Kohlenstoffatome im Substituenten übersteigt 12 pro Lactonring nicht. Beispiele hierfür sind Hydroxycapronsäure, Hydroxybuttersäure, Hydroxydecansäure und/oder Hydroxystearinsäure.

Für die Herstellung der Polyesterdiole wird das unsubstituierte ###-Caprolacton, bei dem m den Wert 4 hat und alle R-Substituenten Wasserstoff sind, bevorzugt. Die Umsetzung mit Lacton wird durch niedermolekulare Polyole wie Ethylenglykol, 1,3-Propandiol, 1,4-Butandiol oder Dimethylolcyclohexan gestartet. Es können jedoch auch andere Reaktionskomponenten, wie Ethylendiamin, Alkyldialkanolamine oder auch Harnstoff mit Caprolacton umgesetzt werden. Als höhermolekulare Diole eignen sich auch Polylactamdiole, die durch Reaktion von beispielsweise ###-Caprolactam mit niedermolekularen Diolen hergestellt werden.

Weitere Beispiele geeigneter Polyole sind Polyetherpolyole, insbesondere mit einem zahlenmittleren Molekulargewicht von 400 bis 5000, insbesondere von 400 bis 3000. Gut geeignete Polyetherdiole sind z.B. Polyetherdiole der allgemeinen Formel H-(-O-(CHR¹)ₒ-)ₚOH, wobei der Substituent R¹ = Wasserstoff oder ein niedriger, gegebenenfalls substituierter Alkylrest ist, der Index o = 2 bis 6, bevorzugt 3 bis 4, und der Index p = 2 bis 100, bevorzugt 5 bis 50, ist. Als besonders gut geeignete Beispiele werden lineare oder verzweigte Polyetherdiole wie Poly(oxyethylen)glykole, Poly(oxypropylen)glykole und Poly(oxybutylen)glykole genannt.

Die Polyetherdiole sollen einerseits keine übermäßigen Mengen an Ethergruppen einbringen, weil sonst die gebildeten erfindungsgemäß zu verwendenden Polyurethane (A) in Wasser anquellen. Andererseits können sie in Mengen verwendet werden, welche die nichtionische Stabilisierung der Polyurethane (A) gewährleistet. Sie dienen dann als die nachstehend beschriebenen funktionellen nichtionischen Gruppen (a3).

Das erfindungsgemäß zu verwendende Polyurethan (A) enthält entweder
(a1) funktionelle Gruppen, die durch Neutralisationsmittel und/oder Quaternisierungsmittel in Kationen überführt werden können, und/oder kationische Gruppen, oder
(a2) funktionelle Gruppen, die durch Neutralisationsmittel in Anionen überführt werden können, und/oder anionische Gruppen, und/oder
(a3) nichtionische hydrophile Gruppen.

Beispiele geeigneter erfindungsgemäß zu verwendender funktioneller Gruppen (a1), die durch Neutralisationsmittel und/oder Quaternisierungsmittel in Kationen überführt werden können, sind primäre, sekundäre oder tertiäre Aminogruppen, sekundäre Sulfidgruppen oder tertiäre Phoshingruppen, insbesondere tertiäre Aminogruppen oder sekundäre Sulfidgruppen.

Beispiele geeigneter erfindungsgemäß zu verwendender kationischer Gruppen (a1) sind primäre, sekundäre, tertiäre oder quaternäre Ammoniumgruppen, tertiäre Sulfoniumgruppen oder quaternäre Phosphoniumgruppen, vorzugsweise quaternäre Ammoniumgruppen, quaternäre Phosphoniumgruppen oder tertiäre Sulfoniumgruppen, insbesondere aber tertiäre Sulfoniumgruppen.

Beispiele geeigneter erfmdungsgemäß zu verwendender funktioneller Gruppen (a2), die durch Neutralisationsmittel in Anionen überführt werden können, sind Carbonsäure-, Sulfonsäure- oder Phosphonsäuregruppen, insbesondere Carbonsäuregruppen.

Beispiele geeigneter erfindungsgemäß zu verwendender anionischer Gruppen (a2) sind Carboxylat-, Sulfonat- oder Phosphonatgruppen, insbesondere Carboxylatgruppen.

Beispiele geeigneter Neutralisationsmittel für die in Kationen umwandelbaren funktionellen Gruppen (a1) sind anorganische und organische Säuren wie Schwefelsäure, Salzsäure, Phosphorsäure, Ameisensäure, Essigsäure, Milchsäure, Dimethylolpropionsäure oder Zitronensäure.

Beispiele für geeignete Neutralisationsmittel für die in Anionen umwandelbaren funktionellen Gruppen (a2) sind Ammoniak, Ammoniumsalze, wie beispielsweise Ammoniumcarbonat oder Ammoniumhydrogencarbonat, sowie Amine, wie z.B.

Trimethylamin, Triethylamin, Tributylamin, Dimethylanilin. Diethylanilin, Triphenylamin, Dimethylethanolamin, Diethylethanolamin, Methyldiethanolamin, Triethanolamin und dergleichen. Die Neutralisation kann in organischer Phase oder in wäßriger Phase erfolgen. Bevorzugt wird als Neutralisationsmittel Dimethylethanolamin eingesetzt.

Die insgesamt in dem erfindungsgemäßen Beschichtungsmittel eingesetzte Menge an Neutralisationsmittel wird so gewählt, daß 1 bis 100 Äquivalente, bevorzugt 50 bis 90 Äquivalente der funktionellen Gruppen (a1) oder (a2) des erfindungsgemäß zu verwendenden Polyurethans (A) neutralisiert werden.

Die Einführung von hydrophilen funktionellen (potentiell) kationischen Gruppen (a1) in die Polyurethanpräpolymere erfolgt über den Einbau von Verbindungen, die mindestens eine, insbesondere zwei, gegenüber Isocyanatgruppen reaktive und mindestens eine zur Kationenbildung befähigte Gruppe im Molekül enthalten; die einzusetzende Menge kann aus der angestrebten Aminzahl berechnet werden.

Geeignete gegenüber Isocyanatgruppen reaktive Gruppen sind insbesondere Hydroxylgruppen sowie primäre und/oder sekundäre Aminogruppen, von denen die Hydroxylgruppen bevorzugt verwendet werden.

Beispiele geeigneter Verbindungen sind 2,2-Dimethylolethyl- oder -propylamin, die mit einem Keton blockiert sind, wobei die resultierende Ketoximgruppe vor der Bildung der kationischen Gruppe (a1) wieder hydrolysiert wird, oder N,N-Dimethyl-, N,N-Diethyl- oder N-Methyl-N-ethyl-2,2-dimethylolethyl- oder - propylamin.

Die Einführung von (potentiell) anionischen Gruppen (a2) in die Polyurethanmoleküle erfolgt über den Einbau von Verbindungen, die mindestens eine gegenüber Isocyanatgruppen reaktive und eine zur Anionenbildung befähigte Gruppe im Molekül enthalten; die einzusetzende Menge kann aus der angestrebten Säurezahl berechnet werden.

Beispiele geeigneter Verbindungen dieser Art sind solche, die zwei gegenüber Isocyanatgruppen reaktive Gruppen im Molekül enthalten. Geeignete gegenüber Isocyanatgruppen reaktive Gruppen sind die vorstehend beschriebenen. Demnach können beispielsweise Alkansäuren mit zwei Substituenten am ###-ständigem Kohlenstoffatom eingesetzt werden. Der Substituent kann eine Hydroxylgruppe, eine Alkylgruppe oder bevorzugt eine Alkylolgruppe sein. Diese Alkansäuren haben mindestens eine, im allgemeinen 1 bis 3 Carboxylgruppen im Molekül. Sie haben 2 bis etwa 25, vorzugsweise 3 bis 10 Kohlenstoffatome. Beispiele geeigneter Alkansäuren sind Dihydroxypropionsäure, Dihydroxybernsteinsäure und Dihydroxybenzoesäure. Eine besonders bevorzugte Gruppe von Alkansäuren sind die ###,###-Dimethylolalkansäuren der allgemeinen Formel R²⁻C(CH₂OH)₂COOH, wobei R² für ein Wasserstoffatom oder eine Alkylgruppe mit bis zu etwa 20 Kohlenstoffatomen steht. Beispiele besonders gut geeigneter Alkansäuren sind 2,2-Dimethylolessigsäure, 2,2-Dimethylolpropionsäure, 2,2-Dimethylolbuttersäure und 2,2-Dimethylolpentansäure. Die bevorzugte Dihydroxyalkansäure ist 2,2-Dimethylolpropionsäure. Aminogruppenhaltige Verbindungen sind beispielsweise ###,###-Diaminovaleriansäure, 3,4-Diaminobenzoesäure, 2,4-Diaminotoluolsulfonsäure und 2,4-Diaminodiphenylethersulfonsäure.

Nichtionische stabilisierende Poly(oxyalkylen)gruppen (a3) können als laterale oder endständige Gruppen in die Polyurethanmoleküle eingeführt werden. Hierfür können beispielsweise Alkoxypoly(oxyalkylen)alkohole mit der allgemeinen Formel R³O-(-CH₂-CHR⁴-O-)ᵣ H in der R⁴ für einen Alkylrest mit 1 bis 6 Kohlenstoffatomen, R⁴ für ein Wasserstoffatom oder einen Alkylrest mit 1 bis 6 Kohlenstoffatomen und der Index r für eine Zahl zwischen 20 und 75 steht, eingesetzt werden. (vgl. die Patentschriften EP-A-0 354 261 oder EP-A-0 424 705).

Von diesen funktionellen (potentiell) ionischen Gruppen (a1) und (a2) und funktionellen nichtionischen Gruppen (a3) sind die (potentiell) anionischen Gruppen (a2) vorteilhaft und werden deshalb besonders bevorzugt verwendet.

Der Einsatz von Polyolen, Polyaminen und Aminoalkoholen führt zur Molekulargewichtserhöhung der Polyurethanpräpolymere (A).

Geeignete Polyole für die Kettenverlängerung sind Polyole mit bis zu 36 Kohlenstoffatomen je Molekül wie Ethylenglykol, Diethylenglykol, Triethylenglykol, 1,2-Propandiol, 1,3-Propandiol, 1,4-Butandiol, 1,2-Butylenglykol, 1,6-Hexandiol, Trimethylolpropan, Ricinusöl oder hydriertes Ricinusöl, Di-trimethylolpropanether, Pentaerythrit, 1,2-Cyclohexandiol, 1,4-Cyclohexandimethanol, Bisphenol A, Bisphenol F, Neopentylglykol, Hydroxypivalinsäure-neopentylglykolester, hydroxyethyliertes oder hydroxypropyliertes Bisphenol A, hydriertes Bisphenol A oder deren Mischungen (vgl. Patentschriften EP-A- 0 339 433, EP-A- 0 436 941, EP-A- 0 517 707).

Beispiele geeigneter Polyamine weisen mindestens zwei primäre und/oder sekundäre Aminogruppen auf. Polyamine sind im wesentlichen Alkylenpolyamine mit 1 bis 40 Kohlenstoffatomen, vorzugsweise etwa 2 bis 15 Kohlenstoffatomen. Sie können Substituenten tragen, die keine mit Isocyanat-Gruppen reaktionsfähige Wasserstoffatome haben. Beispiele sind Polyamine mit linearer oder verzweigter aliphatischer, cycloaliphatischer oder aromatischer Struktur und wenigstens zwei primären Aminogruppen.

Als Diamine sind zu nennen Hydrazin, Ethylendiamin, Propylendiamin, 1,4-Butylendiamin, Piperazin, 1,4-Cyclohexyldimethylamin, Hexamethylendiamin-1,6, Trimethylhexamethylendiamin, Methandiamin, Isophorondiamin, 4,4'-Diaminodicyclohexylmethan und Aminoethylenethanolamin. Bevorzugte Diamine sind Hydrazin, Alkyl- oder Cycloalkyldiamine wie Propylendiamin und 1-Amino-3-aminomethyl-3,5,5-trimethylcyclohexan.

Es können auch Polyamine eingesetzt werden, die mehr als zwei Aminogruppen im Molekül enthalten. In diesen Fällen ist jedoch - z.B. durch Mitverwendung von Monoaminen - darauf zu achten, daß keine vernetzten Polyurethanharze erhalten werden. Solche brauchbaren Polyamine sind Diethylentriamin, Triethylentetramin, Dipropylendiamin und Dibutylentriamin. Als Beispiel für ein Monoamin ist Ethylhexylamin zu nennen (vgl. die Patentschrift EP-A- 0 089 497).

Beispiele geeigneter Aminoalkohole sind Ethanolamin oder Diethanolamin.

Die erfmdungsgemäß zu verwendenden Polyurethane (A) können endständige und/oder laterale olefmisch ungesättigte Gruppen enthalten. Gruppen dieser Art können beispielsweise mit Hilfe von Verbindungen eingeführt werden, welche mindestens eine isocyanatreaktive Gruppe, insbesondere Hydroxylgruppe, und mindestens eine Vinylgruppe aufweisen. Beispiele geeigneter Verbindungen dieser Art sind Trimethylolpropanmonoallylether oder Trimethylolpropanmono(meth)acrylat.

Die erfmdungsgemäß zu verwendenden Polyurethane (A) können mit ethylenisch ungesättigten Verbindungen gepfropft werden. Beispiele geeigneter erfindungsgemäß zu verwendender Polyurethane (A), welche als Pfropfinischpolymerisate vorliegen, sind aus den Patentschriften EP-A-0 521 928, EP-A-0 522 420, EP-A-0 522 419 oder EP-A-0 730 613 bekannt.

Die Herstellung der erfmdungsgemäß zu verwendenden Polyurethane (A) weist methodisch keine Besonderheiten auf, sondern erfolgt nach den üblichen und bekannten Methoden, wie sie im eingangs zitierten Stand der Technik beschrieben sind.

Der Anteil der erfindungsgemäß zu verwendenden Polyurethane (A) an den erfindungsgemäßen Beschichtungsstoffen kann ebenfalls außerordentlich breit variieren und richtet sich in erster Linie nach dem Verwendungszweck der Beschichtungsstoffe. Sofern die erfindungsgemäßen Beschichtungsstoffe thermisch oder thermisch und mit aktinischer Strahlung härtbar sind, richtet sich der Gehalt insbesondere nach der Funktionalität der Polyurethane (A) bezüglich der Vernetzungsreaktion mit dem Vernetzungsrnittel (D). Erfindungsgemäß ist es von Vorteil, die Mengen, wie sie im eingangs zitierten Stand der Technik beschrieben sind, zu verwenden. Bevorzugt werden 10 bis 80, besonders bevorzugt 15 bis 70 und insbesondere 20 bis 60 Gew.-%, jeweils bezogen auf den Festkörpergehalt des erfindungsgemäßen Beschichtungsstoffs, verwendet.

Der dritte wesentliche Bestandteil des erfindungsgemäßen Beschichtungsstoffs ist mindestens ein farb- und/oder effektgebendes, insbesondere ein effektgebendes Pigment (B).

Die Pigmente (B) können aus anorganischen oder organischen Verbindungen bestehen. Der erfmdungsgemäße Beschichtungsstoff, insbesondere der erfindungsgemäße Wasserbasislack und Unidecklack, spez. der erfindungsgemäße Wasserbasislack, gewährleistet daher aufgrund dieser Vielzahl geeigneter Pigmente (B) eine universelle Einsatzbreite und ermöglicht die Realisierung einer Vielzahl von Farbtönen und optischer Effekte.

Als Effektpigmente (B) können Metallplättchenpigmente wie handelsübliche Aluminiumbronzen, gemäß DE-A-36 36 183 chromatierte Aluminiumbronzen, handelsübliche Edelstahlbronzen und nichtmetallische Effektpigmente, wie zum Beispiel Perlglanz- bzw. Interferenzpigmente, eingesetzt werden. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, verwiesen.

Beispiele für geeignete anorganische farbgebende Pigmente (B) sind Titandioxid, Eisenoxide, Sicotransgelb und Ruß. Beispiele für geeignete organische farbgebende Pigmente sind Thioindigopigmente Indanthrenblau, Cromophthalrot, Irgazinorange und Heliogengrün. Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente« bis »Pigmentsvolumenkonzentration«, Seite 563 »Thioindigo-Pigmente« und Seite 567 »Titandioxid-Pigmente« verwiesen.

Die Pigmente (B) können als solche in den erfindunggemäßen Beschichtungsstoff eingearbeitet werden, sofern sie sich hierbei leicht verteilen und nicht agglomerieren und/oder ihre für die optischen Effekte verantwortliche Form nicht geschädigt oder zerstört wird. Erfindungsgemäß ist es von Vorteil, wenn die Pigmente (B) als Pigmentpasten eingearbeitet werden. Weitere Vorteile resultieren, wenn als Pastenharze oder Reibharze Bindemittel verwendet werden, die im erfindungsgemäßen Beschichtungsstoff enthalten sind.

Der Anteil der Pigmente (B) an dem erfindungsgemäßen Beschichtungsstoffkann außerordentlich breit variieren und richtet sich vor allem nach der Deckkraft der Pigmente, dem gewünschten Farbton und dem gewünschten optischen Effekt. Vorzugsweise sind die Pigmente (B) in dem erfindungsgemäßen Beschichtungsstoff in einer Menge von 0,1 bis 50, bevorzugt 0,5 bis 45, besonders bevorzugt 0,5 bis 40, ganz besonders bevorzugt 0,5 bis 35 und insbesondere 0,5 bis 30 Gew.-%, jeweils bezogenen auf den Festkörpergehalt des erfindungsgemäßen Beschichtungsstoffs, enthalten.

Außer den vorstehend beschriebenen Bestandteilen (A), (B) und (C) kann der erfindungsgemäße Beschichtungsstoff mindestens einen festen, flüssigen oder gasförmigen organischen und/oder anorganischen, nieder- und/oder hochmolekularen Zusatzstoff (D) enthalten.

Beispiele geeigneter Zusatzstoffe (D) für thermisch und thermisch und mit aktinischer Strahlung härtbarer erfindungsgemäßer Beschichtungsstoffe sind Vernetzungsmittel (D) wie unblockierte Polyisocyanate, insbesonders die vorstehend beschriebenen, partiell oder vollständig blockierte Polyisocyanate, insbesondere diejenigen, die sich von den vorstehend beschriebenen ableiten, Aminoplastharze, Anhydridgruppen enthaltende Verbindungen oder Harze, Epoxidgruppen enthaltende Verbindungen oder Harze, Tris(alkoxycarbonylamino)triazine, Carbonatgruppen enthaltende Verbindungen oder Harze, beta-Hydroxyalkylamide sowie Verbindungen mit im Mittel mindestens zwei zur Umesterung befähigten Gruppen, beispielsweise Umsetzungsprodukte von Malonsäurediestern und Polyisocyanaten oder von Estern und Teilestern mehrwertiger Alkohole der Malonsäure mit Monoisocyanaten, wie sie der europäischen Patentschrift EP-A-0 596 460 beschrieben werden. Derartige Vernetzungsmittel sind dem Fachmann gut bekannt und werden von zahlreichen Firmen als Verkaufsprodukte angeboten.

Je nach Reaktivität des Vernetzungsmittels (D) kann es den erfindungsgemäßen Beschichtungsstoffen direkt zugesetzt werden, wodurch ein sogenanntes Einkomponentensystem resultiert. Handelt es sich indes um ein besonders reaktives Vernetzungsmittel (D), wie ein Polyisocyanat oder ein Epoxid, wird dieses im allgemeinen erst kurz vor der Verwendung den erfindungsgemäßen Beschichtungsstoffen zugesetzt. Hierbei resultiert ein sogenanntes Zwei- oder Mehrkomponentensystem.

Sollen die erfindungsgemäßen Beschichtungsstoffe nicht nur thermisch sondern auch mit aktinischer Strahlung härtbar (Dual Cure) sein, enthalten sie auch noch übliche und bekannte Zusatzstoffe (D), die mit aktinischer Strahlung aktivierbar sind. Besonders bevorzugt wird UV-Licht angewandt. Beispiele geeigneter Zusatzstoffe (D), die mit aktinischer Strahlung aktivierbar sind, sind (meth)acryl-, allyl-, vinyl- oder dicyclopentadienylfunktionelle (Meth)Acrylatcopolymere oder Polyetheracrylate, Polyesteracrylate, ungesättigte Polyesteracrylate, Epoxyacrylate, Urethanacrylate, Aminoacrylate, Melaminacrylate, Silikonacrylate oder die entsprechenden Methacrylate.

Der erfindungsgemäße Beschichtungsstoff kann des weiteren Reaktiverdünner (D) für die thermische Härtung oder für die Härtung mit aktinischer Strahlung enthalten.

Beispiele geeigneter Reaktiverdünner (D) für die thermische Härtung sind oligomere Polyole (D), welche aus oligomeren Zwischenprodukten, die durch Metathesereaktionen von acyclischen Monoolefmen und cyclischen Monoolefinen gewonnen werden, durch Hydroformylierung und anschließender Hydrierung erhältlich sind; Beispiele geeigneter cyclischer Monoolefine sind Cyclobuten, Cyclopenten, Cyclohexen, Cycloocten, Cyclohepten, Norbonen oder 7-Oxanorbonen; Beispiele geeigneter acyclischer Monoolefine sind in Kohlenwasserstoffgemischen enthalten, die in der Erdölverarbeitung durch Cracken erhalten werden (C₅-Schnitt); Beispiele geeigneter, erfindungsgemäß zu verwendender oligomerer Polyole weisen eine Hydroxylzahl von 200 bis 450, ein zahlenmittleres Molekulargewicht Mn von 400 bis 1000 und ein massenmittleres Molekulargewicht Mw von 600 bis 1100 auf;

Weitere Beispiele geeigneter Polyole (D) sind verzweigte, cyclische und/oder acyclische C₉-C₁₆-Alkane, die mit mindestens zwei Hydroxylgruppen funktionalisiert sind, insbesondere Diethyloctandiole.

Weitere Beispiele zu verwendender Polyole (D) sind hyperverzweigte Verbindungen mit einer tetrafunktionellen Zentralgruppe, abgeleitet von Ditrimethylolpropan, Diglycerin, Ditrimethylolethan, Pentaerythrit, Tetrakis(2-hydroxyethyl)methan, Tetrakis(3-hydroxypropyl)methan oder 2,2-Bishydroxymethyl-butandiol-(1,4) (Homopentaerythrit). Die Herstellung dieser Reaktivverdünner kann nach den üblichen und bekannten Methoden der Herstellung hyperverzweigter und dendrimer Verbindungen erfolgen. Geeignete Synthesemethoden werden beispielsweise in den Patentschriften WO 93/17060 oder WO 96/12754 oder in dem Buch von G. R. Newkome, C. N. Moorefield und F. Vögtle, "Dendritic Molecules, Concepts, Syntheses, Perspectives", VCH, Weinheim, New York, 1996, beschrieben.

Als strahlenhärtbare Reaktivverdünner (D) kommen niedermolekulare polyfunktionelle ethylenisch ungesättigte Verbindungen in Betracht. Beispiele geeigneter Verbindungen dieser Art sind Ester der Acrylsäure mit Polyolen, wie Neopentylglykoldiacrylat, Trimethylolpropantriacrylat, Pentaerythrittriacrylat oder Pentaerythrittetraacrylat; oder Umsetzungsprodukte von Hydroxyalkylacrylaten mit Polyisocyanaten, insbesondere aliphatischen Polyisocyanaten.

Zusätzlich zu den vorstehend beschriebenen Zusatzstoffen (D) oder anstelle von diesen kann der erfindungsgemäße Beschichtungsstoff übliche und bekannte Bindemittel (D) enthalten.

Beispiele üblicher und bekannter Bindemittel (D) sind oligomere und polymere, lineare und/oder verzweigte und/oder blockartig, kammartig und/oder statistisch aufgebaute Poly(meth)acrylate oder Acrylatcopolymerisate, insbesondere die in der Patentschrift DE-A-197 36 535, DE-A-44 37 535 oder DE-A-197 41 554 beschriebenen; Polyester, insbesondere die in den Patentschriften DE-A-40 09 858 oder DE-A-44 37 535 beschriebenen; Alkyde, acrylierte Polyester, Polylactone, Polycarbonate, Polyether, Epoxidharz-Amin-Addukte, (Meth)Acrylatdiole, partiell verseifte Polyvinylester, oder Polyharnstoffe, von denen die Acrylatcopolymerisate und/oder die Polyester besonders vorteilhaft sind.

Ansonsten kann der erfindungsgemäße Beschichtungsstoff lackübliche Additive als Zusatzstoffe (D) in wirksamen Mengen enthalten. Art und Menge der Additive (D) richten sich vor allem nach dem Verwendungszweck des erfindungsgemäßen Beschichtungsstoffs.

Beispiele geeigneter Additive (D) sind
- organische und anorganische Füllstoffe wie Kreide, Calciumsulfate, Bariumsulfat, Silikate wie Talk oder Kaolin, Kieselsäuren, Oxide wie Aluminiumhydroxid oder Magnesiumhydroxid, Nanopartikel oder organische Füllstoffe wie Textilfasern, Cellulosefasern, Polyethylenfasern oder Holzmehl;
- UV-Absorber;
- Radikalfänger;
- Katalysatoren für die Vernetzung;
- Slipadditive;
- Polymerisationsinhibitoren;
- Entschäumer;
- Emulgatoren, insbesondere nicht ionische Emulgatoren wie alkoxylierte Alkanole und Polyole, Phenole und Alkylphenole oder anionische Emulgatoren wie Alkalisalze oder Ammoniumsalze von Alkancarbonsäuren, Alkansulfonsäuren, und Sulfosäuren von alkoxylierten Alkanolen und Polyolen, Phenolen und Alkylphenolen;
- Netzmittel wie Siloxane, fluorhaltige Verbindungen, Carbonsäurehalbester, Phosphorsäureester, Polyacrylsäuren und deren Copolymere oder Polurethane;
- Haftvermittler;
- Verlaufinittel;
- filmbildende Hilfsmittel wie Cellulose-Derivate;
- Flammschutzmittel,
- rheologiesteuernde Additive, wie die aus den Patentschriften WO 94/22968, EP-A-0 276 501, EP-A-0 249 201 oder WO 97/12945 bekannten; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane oder Polyacrylate; oder
- wassermischbare nieder- und hochsiedende organische Lösemittel ("lange Lösemittel");
- Photoinitiatoren, wie Photoinitiatoren vom Norrish II-Typ, deren Wirkungsmechanismus auf einer intramolekularen Variante der Wasserstoff-Abstraktionsreaktionen beruht, wie sie in vielfältiger Weise bei photochemischen Reaktionen auftreten; beispielhaft sei hier auf Römpp Chemie Lexikon, 9. erweiterte und neubearbeitete Auflage, Georg Thieme Verlag Stuttgart, Bd. 4, 1991, verwiesen.

Weitere Beispiele geeigneter Lackadditive (D) werden in dem Lehrbuch "Lackadditive" von Johan Bieleman, Wiley-VCH, Weinheim, New York, 1998, beschrieben.

Methodisch gesehen weist die Herstellung des erfindungsgemäßen Beschichtungsstoffs keine Besonderheiten auf, sondern erfolgt durch das Dispergieren seiner Bestandteile in Wasser, wobei Primär- oder Sekundärdispersionverfahren sowie übliche und bekannte Mischaggregate wie Rührkessel, Dissolver, Rührwerksmühlen oder Extruder angewandt werden. Beispielhaft sei auf den eingangs zitierten Stand der Technik verwiesen.

Der erfindungsgemäße Beschichtungsstoff, insbesondere der erfindungsgemäße Wasserbasislack, ist hervorragend für die Herstellung von farb- und/oder effektgebenden Mehrschichtlackierungen auf grundierten und ungrundierten Substraten nach dem Naß-in-naß-Verfahren geeignet. Des weiteren ist der erfindungsgemäße Beschichtungsstoff, insbesondere der erfindungsgemäße Unidecklack, hervorragend für die Herstellung von einschichtigen farb- und/oder effektgebenden Lackierungen geeignet.

Ansonsten kann der erfindungsgemäße Beschichtungsstoff auch noch als Klebstoff oder Dichtungsmasse oder als Ausgangsprodukt für die Herstellung freitragender Lackfilme verwendet werden.

Besondere Vorteile entfaltet der erfindungsgemäße Beschichtungsstoff in seiner Verwendung als Wasserbasislack im Rahmen des Naß-in-naß-Verfahrens bei dem der Wasserbasislack auf das grundierte oder ungrundierte Substrat appliziert und getrocknet, indes nicht gehärtet wird, wonach man auf die Wasserbasislackschicht einen Klarlack appliziert und die resultierende Klarlackschicht gemeinsam mit der Wasserbasislackschicht thermisch oder thermisch und mit aktinischer Strahlung (Dual Cure) härtet.

Als Substrate kommen alle zu lackierenden Oberflächen, die durch eine Härtung der hierauf befindlichen Schichten unter der Anwendung von Hitze oder der kombinierten Anwendung von Hitze und aktinischer Strahlung (Dual Cure) nicht geschädigt werden, in Betracht; das sind z. B. Metalle, Kunststoffe, Holz, Keramik, Stein, Textil, Faserverbunde, Leder, Glas, Glasfasern, Glas- und Steinwolle, mineral- und harzgebundene Baustoffe, wie Gips- und Zementplatten oder Dachziegel, sowie Verbunde dieser Materialien. Demnach sind die erfindungsgemäßen Mehrschichtlackierungen auch für Anwendungen außerhalb der Automobilerstlackierung und der Autoreparaturlackierung geeignet. Hierbei kommen sie insbesondere für die Lackierung von Möbeln und für die industrielle Anwendung, inklusive Coil Coating und Container Coating, in Betracht. Im Rahmen der industriellen Anwendungen eignen sie sich für die Lackierung praktisch aller Teile für den privaten oder industriellen Gebrauch wie Radiatoren, Haushaltsgeräte, Kleinteile aus Metall wie Schrauben und Muttern, Radkappen, Felgen oder Emballagen.

Im Falle elektrisch leitfähiger Substrate können Grundierungen verwendet werden, die in üblicher und bekannter Weise aus Elektrotauchlacken (ETL) hergestellt werden. Hierfür kommen sowohl anodische (ATL) als auch kathodische (KTL) Elektrotauchlacke, insbesondere aber KTL, in Betracht. Üblicherweise wird, insbesondere in der Automobillackierung, hierauf noch eine Füllerlackierung oder Steinschlagschutzgrundierung aufgetragen, die als Bestandteil der Grundierung angesehen werden kann.

Es können auch grundierte oder ungrundierte Kunststoffteile aus z. B. ABS, AMMA, ASA, CA, CAB, EP, UF, CF, MF, MPF, PF, PAN, PA, PE, HDPE, LDPE, LLDPE, UHMWPE, PC, PC/PBT, PC/PA, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert, geklebt oder abgedichtet werden. Im Falle von nichtfunktionalisierten und/oder unpolaren Substratoberflächen können diese vor der Beschichtung in bekannter Weise einer Vorbehandlung, wie mit einem Plasma oder mit Beflammen, unterzogen oder mit einer Hydrogrundierung versehen werden.

Die Applikation der erfindungsgemäßen Wasserbasislacke kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air - Heißspritzen. Die Applikation kann bei Temperaturen von max. 70 bis 80 °C durchgeführt werden, so daß geeignete Applikationsviskositäten erreicht werden, ohne daß bei der kurzzeitig einwirkenden thermischen Belastung eine Veränderung oder Schädigungen des Wasserbasislacks und seines gegebenenfalls wiederaufzubereitenden Overspray eintreten. So kann das Heißspritzen so ausgestaltet sein, daß der Wasserbasislack nur sehr kurz in der oder kurz vor der Spritzdüse erhitzt wird.

Besonders vorteilhaft ist es, den erfindungsgemäßen Wasserbasislack in einem ersten Auftrag durch ESTA und einem zweiten Auftrag pneumatisch zu applizieren.

Enthalten die erfmdungsgemäßen Wasserbasislacke Bestandteile, die mit aktinischer Strahlung aktivierbar sind, wird die Applikation vorzugsweise unter Ausschluß von Licht durchgeführt. Selbstverständlich können diese Applikationsmethoden im Rahmen des erfindungsgemäßen Naß-in-naß-Verfahrens auch für die Applikation der Klarlackschicht verwendet werden.

Die Aushärtung kann nach einer gewissen Ruhezeit erfolgen. Sie kann eine Dauer von 30 s bis 2 h, vorzugsweise 1 min bis 1 h und insbesondere 1 min bis 45 min haben. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen bis 90 °C und/oder durch eine reduzierte Luftfeuchte < 10g Wasser/kg Luft, insbesondere < 5g/kg Luft, unterstützt und/oder verkürzt werden, sofern hierbei keine Schädigungen oder Veränderungen der Lackschichten eintreten, etwa eine vorzeitige vollständige Vernetzung.

Die physikalische Härtung findet bereits bei während der Ruhezeit statt und kann durch die Anwendung von Hitze beschleunigt werden, wobei die nachstehend bei der thermischen Härtung angewandten Methoden angewandt werden können.

Die thermische Härtung weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Vorteilhafterweise erfolgt die thermische Härtung bei einer Temperatur von 50 bis 100 °C, besonders bevorzugt 60 bis 100 °C und insbesondere 80 bis 100 °C während einer Zeit von 1 min bis zu 2 h, besonders bevorzugt 2 min bis zu 1 h und insbesondere 3 min bis 45 min. Werden Substrate verwendet, welche thermisch stark belastbar sind, kann die thermische Vernetzung auch bei Temperaturen oberhalb 100 °C durchgeführt werden. Im allgemeinen empfiehlt es sich, hierbei Temperaturen von 180 °C, vorzugsweise 160 °C und insbesondere 155 °C nicht zu überschreiten.

Auch die Härtung mit aktinischer Strahlung weist keine methodischen Besonderheiten auf, sondern erfolgt in üblicher und bekannter Weise durch Bestrahlen mit UV-Lampen und/oder Elektronenstrahlquellen vorzugsweise unter Inertgas.

Bei der gemeinsamen Härtung der erfindungsgemäßen Dual Cure-Wasserbasislackschichten mit den Klarlackschichten können die thermische Härtung und Härtung mit aktinischer Strahlung gleichzeitig oder alternierend eingesetzt werden. Werden die beiden Härtungsmethoden alternierend verwendet, kann beispielsweise mit der thermischen Härtung begonnen und mit der Härtung mit aktinischer Strahlung geendet werden. In anderen Fällen kann es sich als vorteilhaft erweisen, mit der Härtung mit aktinischer Strahlung zu beginnen und hiermit zu enden. Der Fachmann kann die Härtungsmethode, welche für den jeweiligen Einzelfall am vorteilhaftesten ist, aufgrund seines allgemeinen Fachwissens gegebenenfalls unter Zuhilfenahme einfacher Vorversuche ermitteln.

Hierbei zeigt sich als weiterer besonderer Vorteil des erfindungsgemäßen Wasserbasislacks, daß sämtliche üblichen und bekannten Klarlacke im Rahmen des Naß-in-naß-Verfahrens mit der erfindungsgemäßen Wasserbasislackschicht kombiniert werden können.

Beispiele geeigneter bekannter Einkomponenten(1K)-, Zweikomponenten(2K)- oder Mehrkomponenten(3K, 4K)-Klarlacke sind aus den Patentschriften DE-A-42 04 518, US-A-5,474,811, US-A-5,356,669, US-A-5,605,965, WO 94/10211, WO 94/10212, WO 94/10213, EP-A-0 594 068, EP-A-0 594 071, EP-A-0 594 142, EP-A-0 604 992, WO 94/22969, EP-A-0 596 460 oder WO 92/22615 bekannt.

Einkomponenten(1K)-Klarlacke enthalten bekanntermaßen hydroxylgruppenhaltige Bindemittel und Vernetzungsmittel wie blockierte Polyisocyanate, Tris(alkoxycarbonylamino)triazine und/oder Aminoplastharze. In einer weiteren Variante enthalten sie als Bindemittel Polymere mit seitenständigen Carbamat- und/oder Allophanatgruppen und carbamat- und/oder allophanatmodifizerte Aminoplastharze als Vernetzungsmittel (vgl. US-A-5,474,811, US-A-5,356,669, US-A-5,605,965, WO 94/10211, WO 94/10212, WO 94/10213, EP-A-0 594 068, EP-A-0 594 071 oder EP-A-0 594 142).

Zweikomponenten(2K)- oder Mehrkomponenten(3K, 4K)-Klarlacke enthalten als wesentliche Bestandteile bekanntermaßen hydroxylgruppenhaltige Bindemittel und Polyisocyanate als Vernetzungsmittel, welche bis zu ihrer Verwendung getrennt gelagert werden.

Beispiele geeigneter Pulverklarlacke sind beispielsweise aus der deutschen Patentschrift DE-A-42 22 194 oder der Produkt-Information der Firma BASF Lacke + Farben AG, "Pulverlacke", 1990 bekannt.

Pulverklarlacke enthalten als wesentliche Bestandteile bekanntermaßen epoxidgruppenhaltige Bindemittel und Polycarbonsäuren als Vernetzungsmittel.

Beispiele geeigneter Pulverslurry-Klarlacke sind beispielsweise aus der US-Patentschrift US-A-4,268,542 und den deutschen Patentanmeldungen DE-A-195 18 392.4 und DE-A-196 13 547 bekannt oder werden in der nicht vorveröffentlichten deutschen Patentanmeldung DE-A-198 14 471.7 beschrieben.

Pulverslurry-Klarlacke enthalten bekanntermaßen Pulverklarlacke in einem wäßrigen Medium dispergiert.

UV-härtbare Klarlacke gehen beispielsweise aus den Patentschriften EP-A-0 540 884, EP-A- 0 568 967 oder US-A-4,675,234 hervor.

Innerhalb der erfmdungsgemäßen Mehrschichtlackierung kann die Dicke der einzelnen Schichten breit variieren. Erfmdungsgemäß ist es indes von Vorteil, wenn die Wasserbasislackschicht eine Dicke von 5 bis 25 µm, insbesondere 7 bis 20µm, und die Klarlackschicht eine Dicke von 15 bis 120 µm, vorzugsweise 30 bis 80 µm und insbesondere 40 bis 70 µm aufweist.

Die erfindungsgemäßen Ein- und Mehrschichtlackierungen weisen hervorragende optische, mechanische und chemische Eigenschaften auf. So sind sie frei von jeglichen Oberflächenstörungen wie Schrumpf (wrinkling). Sie weisen außerdem eine besonders hohe Deckkraft und hervorragende optische Effekte, insbesondere wolkenfreie Metallic-Effekte, auf.

### Beispiel und Vergleichsversuche V1 und V2

**Die Herstellung und Verwendung eines erfindungsgemäßen Wasserbasislacks (Beispiel) und zweier nicht erfindungsgemäBer Wasserbasislacke (Vergleichsversuch V1)**

Für das Beispiel und die Vergleichsversuche V1 und V2 wurden die folgenden Bestandteile bereitgestellt bzw. hergestellt:

### 1. Polyurethandispersion (A):

Die Polyurethandispersion (A) wurde gemäß der in der deutschen Patentschrift DE-A-44 37 535 auf Seite 7, Zeilen 21 bis 34, "B Herstellung einer wäßrigen Polyurethandispersionen", angegebenen Vorschrift hergestellt. Der Festkörpergehalt der Dispersion lag bei 31 Gew.-%

### 2. Sekundäre wäßrige Acrylatdispersion:

Die sekundäre wäßrige Acrylatdispersion wurde, wie in der deutschen Patentschrift Patentschrift DE-A-44 37 535 auf Seite 8, Zeilen 25 bis 49, "E Herstellung einer wäßrigen Polyacrylatdispersion", beschrieben, hergestellt. Der Festkörpergehalt der Dispersion lag bei 40 Gew.-%.

### 3. Wäßrige Lösung eines Polyesters:

Die wäßrige Lösung eines Polyesters wurde, wie in der deutschen Patentschrift DE-A-44 37 535 auf Seite 7, Zeilen 6 bis 19, "A Herstellung einer wäßrigen Polyesterharzlösung", angegebenen Vorschrift hergestellt und mit Wasser auf einen Festkörpergehalt von 60 Gew.-% eingestellt.

### 4. Rheologiehilfsmittel:

3%ige wäßrige Suspension eines synthetischen Schichtsilikats; Laponite® RD der Firma Laporte.

### 5. Metallic-Pigment-Paste:

6,0 Gewichtsteile einer 65%ige Suspension von Aluminiumflakes (Aluminium Stapa Hydrolux® der Firma Eckart) wurden mit 6,5 Gewichtsteilen Butylglykol und 2,1 Gewichtsteilen der wäßrigen Lösung des Polyesters gemäß Ziff. 3. homogenisiert.

### 6. Melaminharzlösung:

Maprenal® VMF 3924 (70%ig) der Firma Clariant.

### 7. Neutralisationsmittel:

10%ige wäßrige Lösung von Dimethylethanolamin.

### 8. Netzmittel:

Handelsübliches Netzmittel der Firma Air Products (50%ig in Butylglykol).

### 9. Erfindungsgemäß zu verwendende Siliziumdioxidpaste:

30 Gewichtsteile der wäßrigen Lösung des Polyesters gemäß Ziff. 3., 46 Gewichtsteile Butylglykol, 12 Gewichtsteile Wasser und 12 Gewichtsteile eines Siliziumdioxidpulvers einer mittleren Teilchengröße von 5,8 µm und einer Dichte der Partikel von 2,1 gcm⁻³ wurden miteinander vermischt und homogenisiert.

### 10. Lösemittel-/Polyestergemisch der Siliziumdioxidpaste

### Beispiel 1

Für das Beispiel 1 wurden 30 Gewichtsteile des Rheologiehilfsmittels gemäß Ziff. 3. vorgelegt. Unter Rühren wurden hierzu in der angegebenen Reihenfolge 27 Gewichtsteile der Polyurethandispersion der Ziff. 1., 3,0 Gewichtsteile der Polyesterlösung gemäß Ziff. 3., 6,0 Gewichtsteile der sekundären wäßrigen Acrylatdispersion gemäß Ziff. 2., 2,1 Gewichtsteile Butylglykol, 6,0 Gewichtsteile Melaminharz gemäß Ziff. 6, 0,3 Gewichtsteile Neutralisationsmittel gemäß Ziff. 7., 1,5 Gewichtsteile des Netzmittels gemäß Ziff. 8 und 6,0 Gewichtsteile deionisiertes Wasser zugegeben. Die resultierende Mischung wurde homogenisiert und in der angegebenen Reihenfolge mit 3,0 Gewichtsteilen der erfindungsgemäß zu verwendenden Siliziumdioxidpaste gemäß Ziff. 9 und mit 14,6 Gewichtsteilen der Metallic-Pigment-Paste gemäß Ziff. 5. versetzt.

Der resultierende Wasserbasislack wurde mit dem Neutralisationsmittel gemäß Ziff. 7. auf einen pH-Wert von 7,8 bis 8,2 und mit deionisiertem Wasser auf eine Viskosität von 70 bis 80 mPas bei einer Scherung von 1000s⁻¹ eingestellt.

### Vergleichsversuch V1

Beispiel 1 wurde wiederholt, nur daß keine Siliziumdioxidpaste gemäß Ziff. 9 angewandt wurde.

### Vergleichsversuch V2

Vergleichsvesuch V1 wurde wiederholt, nur daß 2,64 Gewichtsteile des Lösemittel-/Polyestergemischs der Siliziumdioxidpaste gemäß Ziff. 10 zugesetzt wurden.

Für die Prüfung der anwendungstechnischen Eigenschaften der Wasserbasislacke wurden in üblicher und bekannter Weise Prüftafeln der Abmessungen 30 x 70 cm hergestellt. Hierzu wurden Stahltafeln (Karosseriebleche), die mit einer üblichen und bekannten kathodisch abgeschiedenen und eingebrannten Elektrotauchlackierung beschichtet waren, mit einem handelsüblichen Füller der Firma BASF Coatings AG) beschichtet, wonach die resultierende Füllerschicht während fünf Minuten bei 20 °C und einer relativen Luftfeuchtigkeit von 65% abgelüftet und in einem Umluftofen während 30 Minuten bei 140 °C eingebrannt wurde.

Nach dem Abkühlen der Prüftafeln auf 20 °C wurden die Wasserbasislacke in zwei Spritzgängen appliziert. Der erste Auftrag erfolgte mittels ESTA (Glockendrehzahl: 45.000 l/min, Lenkluft ESTA: 120 Nl/min, Spannung: 65 kV, Abstand: 0,25 m, Ausflußmenge Lack: 170 ml/min), entsprechend einer Trockenfilmdicke von 8 bis 10 µm. Der zweite Auftrag erfolgte pneumatisch (Abstand: 0,32 m, Ausflußmenge Lack: 540 ml/min, Zerstäuberluft - Menge: 300 Nl/min, Zerstäuberluft - Druck: 4,8 bar, Hornluft - Menge: 395 Nl/min, Hornluft - Druck: 5,2 bar), entsprechend einer Trockenfilmdicke von 4 bis 6 µm. Die Wasserbasislackschicht wurde nach den ersten und zweiten Auftrag jeweils während 2 min abgelüftet. Anschließend wurde die Wasserbasislackschicht während 10 min bei 80 °C vorgetrocknet, abgekühlt und mit einem handelsüblichen Zweikomponenten-Klarlack (Firma BASF Coatings AG) überschichtet. Hiernach wurden Wasserbasislackschicht und Klarlackschicht während 30 min bei 130 °C eingebrannt, wodurch die erfindungsgemäße effektgebende Mehrschichtlackierung des Beispiels und die nicht erfindungsgemäßen Mehrschichtlackierungen der Vergleichsversuche V1 und V2 mit einer Trockenfilmdicke der Klarlackierung von 40 µm resultierten.

Die Prüftafeln wurden unter diffusem Licht aus einem Abstand von 2 bis 3 m in Aufsicht (80°) und in Schrägsicht (40°) hinsichtlich der Hell-Dunkel-Schattierung (Wolken) visuell beurteilt und benotet (Note 1: keine Wolken sichtbar; bis Note 5: Wolken sehr deutlich sichtbar).

Bei dem Beispiel resultierte in Aufsicht die Note 2 und in Schrägsicht die Note 3. Bei dem Vergleichsversuchen V 1 und V2 resultierten in Aufsicht jeweils die Note 4 und in Schrägsicht jeweils die Note 5. Dies untermauert, daß durch die erfmdungsgemäße Verwendung des Siliziumdioxids eine signifikante Verbesserung der Hell-Dunkel-Schattierung erzielt wird.

## Patentansprüche

1. Physikalisch, thermisch oder thermisch und mit aktinischer Strahlung härtbarer wäßriger Beschichtungsstoff, enthaltend
A) mindestens ein gesättigtes, ungesättigtes und/oder mit olefinisch ungesättigten Verbindungen gepfropftes, ionisch und/oder nichtionisch stabilisiertes Polyurethan als Bindemittel,
B) mindestens ein farb- und/oder effektgebendes Pigment und
C) mindestens ein farbloses, gegenüber den übrigen Bestandteilen des Beschichtungsstoffs im wesentlichen inertes, transparentes oder opakes Pulver einer mittleren Teilchengröße von 1,0 bis 10,0 µm, dessen Partikel eine Dichte von 0,8 bis 3,6 gcm⁻³ aufweisen.

2. Wäßriger Beschichtungsstoff nach Anspruch 1, **dadurch gekennzeichnet, daß** das Pulver (C) eine mittlere Teilchengröße von 4,0 bis 7,0 µm aufweisen.

3. Wäßriger Beschichtungsstoff nach Anspruch 1 oder 2, **dadurch gekennzeichnet, daß** die Partikel eine Dichte von 0,9 bis 3,2 gcm⁻³ aufweist.

4. Wäßriger Beschichtungsstoff nach einem der Ansprüche 1 bis 3, **dadurch gekennzeichnet, daß** die Partikel eine sphärische Form haben.

5. Wäßriger Beschichtungsstoff nach einem der Ansprüche 1 bis 4, **dadurch gekennzeichnet, daß** das Pulver (C) eine maximale Teilchengröße unterhalb 12 µm aufweist.

6. Wäßriger Beschichtungsstoff nach einem der Ansprüche 1 bis 5, **dadurch gekennzeichnet, daß** die Partikel aus vernetzten oder unvernetzten, organischen oder metallorganischen Polymeren, anorganischen Mineralien, Salzen oder Keramikmaterialien oder organisch modifizierten Keramikmaterialien oder aus Gemischen dieser Stoffe bestehen.

7. Wäßriger Beschichtungsstoff nach einem der Ansprüche 1 bis 6, **dadurch gekennzeichnet, daß** die Partikel aus Siliziumdioxid, Aluminiumsilikaten, Calciumsilikaten, Magnesiumsilikaten, Calciumaluminiumsilikaten, Magnesiumaluminiumsilikaten, Calciummagnesiumsilikaten, Calciummagnesiumaluminiumsilikaten, Berylliumaluminiumsilikaten, Aluminiumphosphat und/oder Calciumphosphat bestehen.

8. Wäßriger Beschichtungsstoff nach einem der Ansprüche 1 bis 7, **dadurch gekennzeichnet, daß** er das Pulver (C) in einer Menge von, bezogen auf den Festkörpergehalt, 0,09 bis 5,0 Gew.-% enthält.

9. Verwendung des wäßrigen Beschichtungsstoffs gemäß einem der Ansprüche 1 bis 8 für die Herstellung einschichtiger oder mehrschichtiger farb-und/oder effektgebender Lackierungen für die Automobilerst- und - reparaturlackierung, die industrielle Lackierung, inclusive Coil Coating und Container Coating, die Kunststofflackierung und die Möbellackierung.

10. Verwendung nach Anspruch 9, **dadurch gekennzeichnet, daß** der wäßrige Beschichtungsstoff als Wasserbasislack und Unidecklack in der Automobilerst- und -reparaturlackierung verwendet wird.

11. Verfahren zur Herstellung einer ein- oder mehrschichtigen farb- und/oder effektgebenden Lackierung durch Applikation mindestens einer Schicht des wäßrigen Beschichtungsstoffs gemäß einem der Ansprüche 1 bis 8 auf ein grundiertes oder ungrundiertes Substrat und thermische Härtung oder Härtung mit Hitze und aktinischem Licht der resultierenden Naßschicht(en).

12. Verfahren zur Herstellung einer farb- und/oder effektgebenden Mehrschichtlackierung nach dem Naß-in-naß-Verfahren durch
(I) Applikation einer Wasserbasislackschicht auf ein grundiertes oder ungrundiertes Substrat,
(II) Ablüften und Zwischentrocknen der resultierenden Wasserbasislackschicht,
(III) Applikation einer Klarlackschicht auf der Wasserbasislackschicht und
(IV) thermische Härtung oder Härtung mit Hitze und aktinischem Licht der beiden Naßschichten,
**dadurch gekennzeichnet, daß** man als Wasserbasislack den wäßrigen Beschichtungsstoff gemäß einem der Ansprüche 1 bis 8 verwendet.

## Claims

1. Aqueous coating material curable physically, thermally, or both thermally and with actinic radiation, comprising
A) at least one ionically and/or nonionically stabilized polyurethane which is saturated, unsaturated and/or grafted with olefinically unsaturated compounds, as binder,
B) at least one colour and/or effect pigment, and
C) at least one colourless, transparent or opaque powder which is substantially inert with respect to the other constituents of the coating material and whose particles have an average size of from 1.0 to 10.0 µm and a density of from 0.8 to 3.6 g cm⁻³.

2. Aqueous coating material according to Claim 1, **characterized in that** the powder (C) has an average particle size of from 4.0 to 7.0 µm.

3. Aqueous coating material according to Claim 1 or 2, **characterized in that** the particles have a density of from 0.9 to 3.2 g cm⁻³.

4. Aqueous coating material according to any of Claims 1 to 3, **characterized in that** the particles have a spherical shape.

5. Aqueous coating material according to any of Claims 1 to 4, **characterized in that** the powder (C) has a maximum particle size of less than 12 µm.

6. Aqueous coating material according to any of Claims 1 to 5, **characterized in that** the particles are composed of crosslinked or non-crosslinked, organic or organometallic polymers, inorganic minerals, salts or ceramic materials or organically modified ceramic materials, or of mixtures of these substances.

7. Aqueous coating material according to any of Claims 1 to 6, **characterized in that** the particles are composed of silicon dioxide (silica), aluminium silicates, calcium silicates, magnesium silicates, calcium aluminium silicates, magnesium aluminium silicates, calcium magnesium silicates, calcium magnesium aluminium silicates, beryllium aluminium silicates, aluminium phosphate and/or calcium phosphate.

8. Aqueous coating material according to any of Claims 1 to 7, **characterized in that** it comprises the powder (C) in an amount, based on the solids content, of from 0.09 to 5.0% by weight.

9. Use of the aqueous coating material according to any of Claims 1 to 8 for producing single-coat or multicoat colour and/or effect paint systems for automotive OEM finishing and automotive refinish, industrial coating, including coil coating and container coating, the coating of plastics, and furniture coating.

10. Use according to Claim 9, **characterized in that** the aqueous coating material is used as aqueous basecoat material and solid-colour topcoat material in automotive OEM finishing and automotive refinish.

11. Process for producing a single-coat or multicoat colour and/or effect paint system by applying at least one coat of the aqueous coating material according to any of Claims 1 to 8 to a primed or unprimed substrate and subjecting the resultant wet film(s) to thermal curing or curing with heat and actinic light.

12. Process for producing a multicoat colour and/or effect paint system by the wet-on-wet technique, by
(I) applying an aqueous basecoat film to a primed or unprimed substrate,
(II) flashing off and predrying the resulting aqueous basecoat film,
(III) applying a clearcoat film to the aqueous basecoat film, and
(IV) curing the two wet films thermally or with heat and actinic light,
**characterized in that** the aqueous coating material according to any of Claims 1 to 8 is used as aqueous basecoat material.

## Revendications

1. Substance de revêtement aqueuse durcissable physiquement, thermiquement ou thermiquement et avec un rayonnement actinique, contenant :
A) comme liant au moins un polyuréthanne saturé, insaturé et/ou greffé avec des composés à insaturation oléfinique, stabilisé par voie ionique et/ou non ionique,
B) au moins un pigment donnant une coloration et/ou un effet, et
C) au moins une poudre incolore, sensiblement inerte par rapport aux composants restants de la substance de revêtement, transparente ou opaque d'une taille particulaire moyenne de 1,0 à 10,0 µm, dont les particules présentent un poids volumique de 0,8 à 3,6 g/cm⁻³.

2. Substance de revêtement aqueuse selon la revendication 1, **caractérisée en ce que** la poudre (C) présente une taille particulaire moyenne de 4,0 à 7,0 µm.

3. Substance de revêtement aqueuse selon la revendication 1 ou 2, **caractérisée en ce que** les particules présentent un poids volumique de 0,9 à 3,2 g/cm⁻³ .

4. Substance de revêtement aqueuse selon l'une quelconque des revendications 1 à 3, **caractérisée en ce que** les particules ont une forme sphérique.

5. Substance de revêtement aqueuse selon l'une quelconque des revendications 1 à 4, **caractérisée en ce que** la poudre (C) présente une taille particulaire maximale inférieure à 12 µm.

6. Substance de revêtement aqueuse selon l'une quelconque des revendications 1 à 5, **caractérisée en ce que** les particules sont constituées de polymères réticulés ou non, organiques ou organométalliques, de minéraux inorganiques, de sels ou de matériaux céramiques ou de matériaux céramiques modifiés organiquement ou de mélanges de ces substances.

7. Substance de revêtement aqueuse selon l'une quelconque des revendications 1 à 6, **caractérisée en ce que** les particules sont constituées de dioxyde de silicium, de silicates d'aluminium, de silicates de calcium, de silicates de magnésium, de silicates de calcium/aluminium, de silicates de magnésium/aluminium, de silicates de calcium/magnésium, de silicates de calcium/magnésium/aluminium, de silicates de béryllium/aluminium, de phosphate d'aluminium et/ou de phosphate de calcium.

8. Substance de revêtement aqueuse selon l'une quelconque des revendications 1 à 7, **caractérisée en ce qu'**elle contient la poudre (C) en quantité de 0,09 à 5,0% en poids par rapport à la teneur en corps solides.

9. Utilisation de la substance de revêtement aqueuse selon l'une quelconque des revendications 1 à 8 pour la fabrication de peintures à une ou plusieurs couches donnant une coloration et/ou un effet pour les enductions de fond et les enductions de retouche pour automobiles, la peinture industrielle, notamment l'enduction sur bande et l'enduction de conteneurs, l'enduction de synthétiques et l'enduction de meubles.

10. Utilisation selon la revendication 9, **caractérisée en ce que** la substance de revêtement aqueuse est utilisée comme peinture à base d'eau et comme peinture de finition unie dans les enductions de fond et les enductions de retouche pour automobiles.

11. Procédé de fabrication d'une peinture à une ou plusieurs couches donnant une coloration et/ou un effet par application d'au moins une couche de la substance de revêtement aqueuse selon l'une quelconque des revendications 1 à 8 sur un substrat apprêté ou non et par durcissement thermique ou durcissement à la chaleur et à la lumière actinique de la ou des couches humides obtenues.

12. Procédé de fabrication d'une peinture à plusieurs couches donnant une coloration et/ou un effet selon le procédé humide sur humide par :
(I) application d'une couche de peinture à base d'eau sur un substrat apprêté ou non,
(II) évacuation de l'air et séchage intermédiaire de la couche de peinture à base d'eau obtenue,
(III) application d'une couche de peinture transparente sur la couche de peinture à base d'eau et
(IV) durcissement thermique ou durcissement à la chaleur et à la lumière actinique des deux couches humides,
**caractérisé en ce que** l'on utilise comme peinture à base d'eau la substance de revêtement aqueuse selon l'une quelconque des revendications 1 à 8.
